(19) Europäisches Patentamt
European Patent Office
Office européen des brevets

(11) **EP 4 244 585 B1**

(12) **EUROPÄISCHE PATENTSCHRIFT**

(45) Veröffentlichungstag und Bekanntmachung des Hinweises auf die Patenterteilung:
**06.11.2024 Patentblatt 2024/45**

(21) Anmeldenummer: **21783216.1**

(22) Anmeldetag: **23.09.2021**

(51) Internationale Patentklassifikation (IPC):
*G01S 13/34* (2006.01)    *H01P 3/16* (2006.01)
*G01F 23/284* (2006.01)    *G01S 13/88* (2006.01)
*G01S 13/89* (2006.01)    *H01Q 1/22* (2006.01)
*H01Q 3/24* (2006.01)    *H01Q 21/20* (2006.01)
*G01S 7/03* (2006.01)    *G01S 13/42* (2006.01)

(52) Gemeinsame Patentklassifikation (CPC):
**G01F 23/284; G01S 7/03; G01S 13/88; G01S 13/89; H01P 3/165; H01Q 1/225; H01Q 3/247; H01Q 21/20;** G01S 13/34; G01S 13/426

(86) Internationale Anmeldenummer:
**PCT/EP2021/076265**

(87) Internationale Veröffentlichungsnummer:
**WO 2022/100916 (19.05.2022 Gazette 2022/20)**

(54) **FÜLLSTANDSMESSGERÄT**

FILL LEVEL MEASUREMENT DEVICE

DISPOSITIF DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2020 DE 102020129765**

(43) Veröffentlichungstag der Anmeldung:
**20.09.2023 Patentblatt 2023/38**

(73) Patentinhaber: **Endress+Hauser SE+Co. KG 79689 Maulburg (DE)**

(72) Erfinder:
• **MAYER, Winfried 89290 Buch (DE)**

• **OTTERSBACH, Pablo 45149 Essen (DE)**

(74) Vertreter: **Büker, Florian Endress + Hauser Group Services (Deutschland) AG+Co. KG Colmarer Straße 6 79576 Weil am Rhein (DE)**

(56) Entgegenhaltungen:
WO-A1-2019/068347    CN-A- 111 721 357
DE-A1- 102020 129 427    DE-A1- 102021 118 496
DE-A1- 102021 121 547    US-A1- 2019 107 427

**Beschreibung**

Die Erfindung betrifft ein Füllstandsmessgerät, das zur Bestimmung eines dreidimensionalen Füllstands-Profils dient.

In der Prozessautomatisierungstechnik werden zur Erfassung relevanter Prozessparameter entsprechende Feldgeräte eingesetzt. Zwecks Erfassung der jeweiligen Prozessparameter sind in den entsprechenden Feldgeräten daher geeignete Messprinzipien implementiert, um als Prozessparameter etwa einen Füllstand, einen Durchfluss, einen Druck, eine Temperatur, einen pH-Wert, ein Redoxpotential oder eine Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich berührungslose Messverfahren etabliert, da sie robust und wartungsarm sind. Ein weiterer Vorteil berührungsloser Messverfahren besteht in der Fähigkeit, den Füllstand quasi kontinuierlich messen zu können. Im Bereich der kontinuierlichen Füllstandsmessung werden daher vorwiegend Radar-basierte Messverfahren eingesetzt (im Kontext dieser Patentanmeldung bezieht sich der Begriff "Radar" auf Signale bzw. elektromagnetische Wellen mit Frequenzen zwischen 0.03 GHz und 300 GHz). Ein etabliertes Messverfahren bildet hierbei FMCW (*"Frequency Modulated Continuous Wave"*). Beschrieben wird das FMCW-basierte Füllstands-Messverfahren beispielsweise in der Offenlegungsschrift DE 10 2013 108 490 A1.

Mittels des FMCW-Verfahrens ist es möglich, die Entfernung bzw. den Füllstand zumindest punktuell zu messen. Dabei richtet sich der Punkt, an dem der Füllstand gemessen wird, nach der Ausrichtung der Sende- /Empfangs-Antenne bzw. nach der Richtung ihrer Strahlkeule (aufgrund der allgemein reziproken Eigenschaften von Antennen ist die Charakteristik bzw. der Strahlwinkel der Strahlkeule der jeweiligen Antenne unabhängig davon, ob sie sendet oder empfängt; bei dem Begriff *"Winkel"* oder *"Strahlwinkel"* handelt es sich im Rahmen der vorliegenden Patentanmeldung um denjenigen Winkel, unter dem die Strahlkeule ihre maximale Sende-Intensität bzw. Empfangs-Empfindlichkeit aufweist).

Im Falle von flüssigen Füllgütern, deren Füllstand homogen ist, ist eine punktuelle Füllstandsmessung ausreichend. In diesen Fällen ist das Füllstandsmessgerät so ausgerichtet, dass die Strahlkeule der Antenne in etwa senkrecht nach unten gen Füllgut gerichtet ist und die Entfernung zum Füllgut bestimmt. Bei feststoffartigen Füllgütern wie Kies oder Getreide kann der Füllstand beispielsweise aufgrund von Schüttgutkegeln jedoch inhomogen sein, so dass der vom Füllstandsmessgerät ermittelte Füllstandswert nur bedingt aussagekräftig ist. Speziell in solchen Fällen ist es daher erstrebenswert, die Entfernung bzw. den Füllstand in Form eines dreidimensionalen Füllstands-Profils bestimmen zu können.

Um dies zu ermöglichen, muss das Füllstandsmessgerät ausgelegt sein, um eingehende Radar-Signale einem zugehörigen Raumwinkel zuordnen zu können. Umgesetzt werden kann dies beispielsweise mittels des MIMO-Prinzips (*"Multiple InputMultiple Output"*). Das Prinzip beruht auf entsprechenden Ansteuerung einer Antennen-Anordnung, die aus spaltenförmig angeordneten Sende-Antennen und zeilenförmig angeordneten Empfangs-Antennen besteht, um ein digitale Strahlformung des resultierenden Radar-Signals zu realisieren. Hardware-seitig kann dies beispielsweise mittels entsprechend programmierter MMIC's' (*"Monolithic Microwave Integrated Circuit"*) realisiert werden. Näher beschrieben werden MIMO-basierte Radar-Systeme beispielsweise in *"MIMO Radar Signal Processing"* (Jian Li), 2009.

In der Veröffentlichungsschrift US 2019/07427 A1 wird ein Radar-basiertes Füllstandsmessgerät zur Bestimmung eines dreidimensionalen Füllstands-Profils offenbart, das eine Antennen-Anordnung mit einer definierten Anzahl an Sende-Antennen und einer korrespondierenden Anzahl an Empfangs-Antennen aufweist. Dabei sind die einzelnen Antennen einseitig auf derjenigen Seite der Platine angeordnet, auf der auch die Sende-/Empfangs-Einheit zur Signalerzeugung bzw. Signalverarbeitung angeordnet ist.

Auch in der Veröffentlichungsschrift US 2019/07427 A1 wird ein Radar-basiertes Füllstandsmessgerät zur Bestimmung eines dreidimensionalen Füllstands-Profils beschrieben, wobei dort zur Signalverbesserung eine Rauschpegel-Reduktion und eine Signalverstärkung vorgeschlagen wird.

Das in der Veröffentlichungsschrift CN 111 721 357 A beschriebene Füllstandsmessgerät zur Bestimmung von dreidimensionalen Füllstands-Profilen umfasst eine Leiterplattenbasierte Antennen-Anordnung mit vorgeschalteter Linse. Dabei sind die Mircorstripbasierten Sende- und Empfangs-Antennen derart abwechselnd entlang einer gemeinsamen Kontur aufgereiht, dass hierdurch die Linsen-Achse radialsymmetrisch umschlossen wird.

Vor allem zu Explosionsschutz-Zwecken des Füllstandsmessgerätes wird oftmals eine örtliche Trennung zwischen der aktiven, also mit Strom versorgten Sende-/EmpfangsEinheit und der passiven Antennen-Anordnung gefordert. Die Sende-/Empfangs-Einheit ist daher außerhalb des Behälters angeordnet, während die Antennen-Anordnung in den Behälter hineinstehen muss und somit den Prozessbedingungen innerhalb des Behälters ausgesetzt ist. Um diese Aufteilung zu realisieren, ist die Sende-/Empfangs-Einheit örtlich durch einen entsprechenden Messgeräte-Hals von der Antennen-Anordnung getrennt. Dabei werden die Radar-Signale von bzw. zur Antennen-Anordnung durch den Messgeräte-Hals zur Sende-/Empfangs-Einheit geführt. Unter anderem zu Explosionsschutz-Zwecken umfasst der Messgeräte-Hals außerdem gegebenenfalls eine Prozessdichtung, welche die für das Füllstandsmessgerät vorgesehene Behälteröffnung nach dem Einbau beispielsweise in Form eines Flansches verschließt.

Neben Explosionsschutzanforderungen muss der Messgeräte-Hals weitere Schutzfunktionen erfüllen: Je nach Anwendung herrschen im Inneren des Behälters hohe Temperaturen, hoher Druck oder gefährliche Gase vor. Daher müssen der Messgeräte-Hals und der Flansch eine Druckdichtung, eine Temperaturbarriere und eine Gasdichtung darstellen. Diese Funktionen erfordern zusammen mit den Einbauvoraussetzungen einen deutlichen Abstand zwischen der Sende-/Empfangs-Einheit und der Antennen-Anordnung, über den die Messsignale möglichst verlustarm geführt werden müssen. In punktuell messenden Füllstandsmessgeräten kann dieser Abstand durch einen einzigen Wellenleiter überbrückt werden, wobei je nach Frequenzbereich Koaxialleitungen, Hohlleiter oder dielektrische Wellenleiter zum Einsatz kommen können.

In dreidimensional abbildenden Füllstandsmessgeräten, die auf Basis digitaler Strahlformung arbeiten, muss der Abstand zwischen der Sende-/Empfangs-Einheit und der Antennen-Anordnung jedoch nicht nur für ein einziges, sondern in Abhängigkeit der Antennen-Anzahl für eine entsprechend viele Radar-Signale erfolgen. Bei technisch und wirtschaftlich sinnvollen Lösungen erfordert dies bis zu über 200 Wellenleiter. Konstruktiv bzw. fertigungstechnisch ist dies jedoch schwer zu realisieren.

Es ist dementsprechend eine Aufgabe der Erfindung, ein dreidimensional abbildendes Füllstandsmessgerät bereitzustellen, das einfach fertigbar und unter schwierigen Prozessbedingungen einsetzbar ist.

Die Erfindung löst diese Aufgabe durch ein Radar-basiertes Füllstandsmessgerät zur Bestimmung eines Füllstands-Profils eines Füllgutes in einem Behälter. Hierzu umfasst das Füllstandsmessgerät folgende Komponenten:

- Eine Antennen-Anordnung, mit

    ◦ einer definierten Anzahl an Sende-Antennen, mittels denen jeweils ein Radar-Signal gen Füllgut ausendbar ist, und
    ◦ mit einer definierten Anzahl an Empfangs-Antennen, mittels denen nach Reflektion des Radar-Signals an der Füllgut-Oberfläche jeweils ein Empfangs-Signal empfangbar ist,

- eine Sende-/Empfangs-Einheit, die ausgelegt ist,

    ◦ um das jeweilige Radar-Signal beispielsweise gemäß des MIMO-Prinzips zu erzeugen, und
    ◦ um anhand der Empfangs-Signale das Füllstands-Profil zu erstellen, und

- einen Messgeräte-Hals, der entlang einer zentralen Gerätehals-Achse zwischen der Antennen-Anordnung und der Sende-/Empfangs-Einheit angeordnet ist, mit

    ◦ einer zur Anzahl an Sende-Antennen korrespondierenden Anzahl an Sende-Wellenleitern, welche innerhalb des Messgeräte-Halses parallel zur Gerätehals-Achse verlaufen und die Sende-Antennen jeweils mit der Sende-/Empfangs-Einheit verbinden, und
    ◦ mit einer zur Anzahl an Empfangs-Antennen korrespondierenden Anzahl an Empfangs-Wellenleitern, welche innerhalb des Messgeräte-Halses parallel zur Gerätehals-Achse verlaufen und die Sende-Antennen jeweils mit der Sende-/Empfangs-Einheit verbinden.

Dabei können die Sende-Wellenleiter und/oder die Empfangs-Wellenleiter prinzipiell als Hohlleiter, Koaxialleiter oder als dielektrischer Wellenleiter ausgelegt sein.

Das erfindungsgemäße Füllstandsmessgerät zeichnet sich dadurch aus, dass die Sende-Wellenleiter entlang einer ersten Kontur, welche die Gerätehals-Achse radialsymmetrisch umschließt, vorzugsweise in regelmäßigen Abständen zueinander aufgereiht sind, und dass die Empfangs-Wellenleiter entweder ebenfalls entlang der ersten Kontur oder entlang einer zweiten Kontur, welche die Gerätehals-Achse ebenso radialsymmetrisch umschließt, aufgereiht sind. Dabei können auch die Empfangs-Wellenleiter in gleichmäßigen Abständen und abwechselnd mit den Sende-Wellenleitern angeordnet werden, sofern auch die Empfangs-Wellenleiter entlang der ersten Kontur angeordnet sind. Für den Fall, dass die Empfangs-Wellenleiter entlang der zweiten Kontur angeordnet sind, ist es per se nicht essentiell, ob die Sende-Wellenleiter in Bezug zur Gerätehals-Achse außerhalb oder innerhalb der Empfangs-Wellenleiter angeordnet sind, also ob die erste Kontur außerhalb der zweiten Kontur verläuft, oder nicht. Abhängig gemacht werden kann dies beispielsweise von der Implementierung des MIMO-Prinzips bzw. davon, ob hierfür mehr Sende-Antennen oder mehr Empfangs-Antennen und die dafür erforderliche Anzahl an Sende- und Empfangs-Wellenleitern benötigt werden.

Als "Radialsymmetrische Kontur" definiert sich im Rahmen der Erfindung jede Kontur, die sich in Bezug zur Gerätehals-Achse in mindestens zwei jeweils gleich große Winkelsegmente einteilen lässt, wobei die Kontur in jedem der gleichgroßen Winkelsegmente den gleichen Verlauf aufweist. Dementsprechend handelt es sich bei einer radialsymmetrischen Kontur im Sinne der Erfindung beispielsweise um eine kreisförmigen, eine elliptische oder eine rechteckige Kontur. Vorteilhaft ist es diesbezüglich, wenn sowohl der Messgeräte-Hals, die erste Kontur als auch die zweite Kontur in Bezug zur Gerätehals-Achse eine gleiche Radialsymmetrie, wie beispielsweise eine kreisförmige Symmetrie, aufweisen. Vorteilhaft hieran ist, dass die Konturen in Bezug zum Messgeräte-Hals so dimensioniert werden können, dass die Wellenleiter direkt an den Messgeräte-Hals bzw. den nächstaußen liegenden Wellenleiter-Basiskörper angrenzen. Hierdurch ist mittig im Messgeräte-Hals weiterer Freiraum für zusätzliche Durchführungen bzw. Komponenten des Füllstandsmessgerätes.

In Bezug zur Sende-/Empfangs-Einheit wird unter dem Begriff *"Einheit"* im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung, wie ein FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. mittels derselben physikalischen Digitalschaltung betrieben werden. Konkret kann die Sende-/Empfangs-Einheit zur Ansteuerung der Antennen-Anordnung über die Wellenleiter beispielsweise auf einer entsprechenden Anzahl an MMIC ("*Monolithic Microwave Integrated Circuit*") basieren, da diese je nach Auslegung in der Lage sind, die zur Umsetzung des MIMO-Prinzips erforderlichen Operationen durchzuführen, wie Einprägen von Phasenverschiebungen, Verstärkung der Signal-Amplitude, oder Vergleichbares.

Sofern MMICs verwendet werden, wirkt sich die erfindungsgemäße Anordnung der Sende- und Empfangs-Wellenleiter insofern vorteilhaft auf die Sende-/Empfangs-Einheit aus, als dass der Abstand zwischen den einzelnen MMIC maximiert werden kann. Da MMIC generell eine vergleichsweise starke thermische Verlustleistung aufweisen, wird die thermische Belastung der MMIC untereinander sowie die thermische Belastung innerhalb der Sende-/Empfangs-Einheit durch die Maximierung der Abstände insgesamt minimiert: Hierzu sind die MMIC oberhalb des Messgeräte-Halses sowie in Bezug zur Gerätehals-Achse entlang der ersten Kontur jeweils zwischen einem Sende-Wellenleiter und einem der Empfangs-Wellenleiter anzuordnen, sofern die Empfangs-Wellenleiter abwechselnd mit den Sende-Wellenleitern entlang der ersten Kontur aufgereiht sind. Sofern die Empfangs-Wellenleiter nicht wie de Sende-Wellenleiter entlang der ersten Kontur, sondern entlang der zweiten Kontur angeordnet sind, sind die MMIC oberhalb des Messgeräte-Halses sowie in Bezug zur Gerätehals-Achse zwischen der ersten Kontur und der zweiten Kontur anzuordnen.

Die erfindungsgemäße Anordnung der Wellenleiter im Messgeräte-Hals lässt sich konstruktiv und fertigungstechnisch aufwandsarm mittels zumindest eines gemeinsamen, insbesondere monolithischen Basiskörpers realisieren. In diesem Fall können die Sende-Wellenleiter und, sofern die Empfangs-Wellenleiter abwechselnd mit den Sende-Wellenleitern entlang der ersten Kontur aufgereiht sind, zusätzlich auch die Empfangs-Wellenleiter monolithisch durch einen ersten Basiskörper derart ausgebildet werden, dass zwischen den einzelnen Wellenleitern jeweils eine erste Stützstruktur des ersten Basiskörpers angeordnet ist. Sofern die Empfangs-Wellenleiter nicht entlang der ersten Kontur, sondern entlang der zweiten Kontur aufgereiht sind, können die Empfangs-Wellenleiter innerhalb des Messgeräte-Halses wiederum durch einen zusätzlichen zweiten Basiskörper derart ausgebildet werden, dass zwischen den einzelnen Empfangs-Wellenleitern jeweils eine zweite Stützstruktur des zweiten Basiskörpers angeordnet ist.

Für den Fall, dass die Wellenleiter als dielektrische Wellenleiter konzipiert sind, können die dielektrischen Wellenleiter und der erste Basiskörper bzw. die ersten Stützstrukturen als ein gemeinsames, monolithisches Formteil gefertigt werden. Hierbei können die Empfangs-Wellenleiter, sofern sie entlang der zweiten Kontur aufgereiht sind, wiederum derart als dielektrische Wellenleiter realisiert werden, dass die Empfangs-Wellenleiter und der zweite Basiskörper als ein weiteres monolithisches Formteil gefertigt sind. Die monolithischen Formteile können insbesondere mittels Heißumformen, Spritzguss, 3D-Druck oder Extrusion von PTFE, PE oder PFA gefertigt werden.

Bei der Auslegung der Wellenleiter als Hohlleiter können diese so realisiert werden, dass zumindest der erste Basiskörper, insbesondere in Verbindung mit einem entsprechenden Innenwand-Segment des Messgeräte-Halses, jeweils die Innenwandungen der Hohlleiter ausbildet. Sofern die Empfangs-Wellenleiter hierbei nicht entlang der ersten Kontur, sondern entlang der zweiten Kontur aufgereiht sind, können diese wiederum derart als Hohlleiter realisiert werden, dass zumindest der zweite Basiskörper, insbesondere in Verbindung mit dem äußeren oder inneren ersten Basiskörper, jeweils die Innenwandungen der Empfangs-Hohlleiter ausbilden. Auch bei Auslegung der Wellenleiter als Hohlleiter kann/können der/die Basiskörper als monolithisches Formteil konzipiert werden, welches jeweils mittels Heißumformen, Spritzguss, Extrusion oder additiver Fertigung, also 3D-Druck von PTFE, PE oder PFA gefertigt wird.

Anhand der nachfolgenden Figuren wird die Erfindung näher erläutert. Es zeigt:

Fig. 1: ein erfindungsgemäßes, Radar-basiertes Füllstandsmessgerät an einem Behälter,

Fig. 2: eine dreidimensionale Ansicht von Basiskörpern, mittels denen Wellenleiter im Messgeräte-Hals realisiert werden können,

Fig. 3: eine erste Variante des Messgeräte-Halses des Füllstandsmessgerätes,

Fig. 4: eine mögliche Anordnung der Sende-/Empfangs-Einheit zur ersten Variante des Messgeräte-Halses,

Fig. 5: eine zweite Variante des Messgeräte-Halses,

Fig. 6: eine mögliche Anordnung der Sende-/Empfangs-Einheit zur zweiten Variante des Messgeräte-Halses,

Fig. 7: eine dritte Variante des Messgeräte-Halses,

Fig. 8: eine vierte Variante des Messgeräte-Halses,

Fig. 9: eine fünfte Variante des Messgeräte-Halses, und

Fig. 10: eine sechste Variante des Messgeräte-Halses.

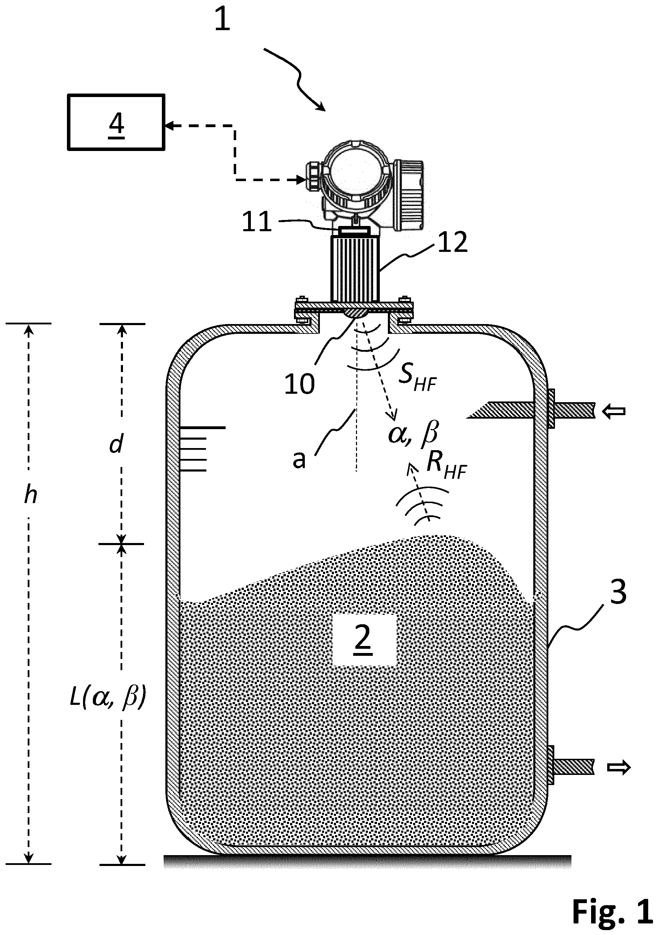

Zum prinzipiellen Verständnis von Radar-basierter Füllstandsmessung ist in Fig. 1 ein Behälter 3 mit einem Füllgut 2 gezeigt, dessen Füllstand L in Form eines dreidimensionalen Füllstands-Profils $L(\alpha, \beta)$ zu erfassen ist. Dabei kann der Behälter 3 je nach Art des Füllgutes 2 und Einsatzgebiet bis zu mehr als 100 m hoch sein. Von der Art des Füllgutes 2 und dem Einsatzgebiet hängen auch die Bedingungen im Behälter 3 ab. So es kann im Falle von exothermen Reaktionen beispielsweise zu hoher Temperatur- und Druckbelastung kommen. Bei staubhaltigen oder entzündlichen Stoffen sind im Behälter-Inneren entsprechende Explosionsschutzbedingungen einzuhalten.

Um das Füllstands-Profil $L(\alpha, \beta)$ unabhängig von den vorherrschenden Bedingungen ermitteln zu können, ist ein Füllstandsmessgerät 1 in einer bekannten Einbauhöhe h oberhalb des Füllgutes 2 an einer entsprechenden Öffnung am Behälter 3 angebracht. Dabei ist das Füllstandsmessgerät 1 ist so ausgerichtet und befestigt, dass es über eine Antennen-Anordnung 10 Radar-Signale $S_{HF}$ in etwa entlang einer horizontal ausgerichteten Achse a in Richtung der Oberfläche des Füllgutes 2 aussendet. Nach Reflektion an der Füllgut-Oberfläche empfängt das Füllstandsmessgerät 1 die reflektierten Radar-Signale $R_{HF}$ wiederum über die Antennen-Anordnung 10. Dabei ist die Signallaufzeit zwischen Aussenden und Empfang des jeweiligen Radar-Signals $S_{HF}$, $R_{HF}$ proportional zum winkelabhängigen Abstand $d(\alpha, \beta)$ zwischen Füllstandsmessgerät 1 und Füllgut 2, wobei die Signallaufzeit vom Füllstandsmessgerät 1 beispielsweise mittels des FMCW- oder Pulslaufzeit-Verfahrens bestimmt werden kann. Dementsprechend kann das Füllstandsmessgerät 1 beispielsweise auf Basis einer entsprechenden Kalibration die gemessene Laufzeit dem jeweiligen Abstand d zuordnen. Hierüber kann das Füllstandsmessgerät 1 gemäß

$$d(\alpha,\beta) = h - L(\alpha,\beta)$$

das Füllstands-Profil $L(\alpha, \beta)$ bestimmen, sofern die Einbauhöhe h im Füllstandsmessgerät 1 hinterlegt wird.

In der Regel ist das Füllstandsmessgerät 1 über eine Schnittstelle, etwa "PROFIBUS", "HART" oder "Wireless HART" mit einer übergeordneten Einheit 4, wie z. B. einem Prozessleitsystem, verbunden. Hierüber kann das Füllstands-Profil $L(\alpha, \beta)$ übermittelt werden, beispielsweise um gegebenenfalls Zu- oder Abflüsse des Behälters 3 zu steuern. Es können aber auch anderweitige Informationen über den allgemeinen Betriebszustand des Füllstandsmessgerätes 1 kommuniziert werden.

Da das Füllgut 2, wie in Fig. 1 schematisch dargestellt ist, unter anderem im Falle von Schüttgütern keine planare Oberfläche aufweist, ist das Füllstandsmessgerät 1 entsprechend ausgelegt, den Füllstand L mittels digitaler Strahlschwenkung in Form eines dreidimensionalen Füllstands-Profils $L(\alpha, \beta)$ zu bestimmen. Dementsprechend umfasst die Antennen-Anordnung 10 eine Vielzahl an Sende- und Empfangs-Antennen, die beispielsweise in Bezug zu einem Substrat in Form von Spalten und Reihen rechtwinklig zueinander angeordnet sind. Dabei dienen die Sende-Antennen der Antennen-Anordnung 10 dazu, das jeweilige Radar-Signal $S_{HF}$ in Richtung des Füllguts 2 auszusenden. Mittels der Empfangs-Antennen werden jeweils die reflektierten Radar-Signale $R_{HF}$ empfangen.

Angesteuert werden die Antennen der Antennen-Anordnung 10 von einer Sende-/Empfangs-Einheit 11 des Füllstandsmessgerätes 1. Zur Umsetzung der digitalen Strahlschwenkung kann in der Sende-/Empfangs-Einheit 11 beispielsweise das MIMO-Prinzip implementiert sein. Hierdurch kann die Sende-/Empfangseinheit 11 die empfangenen Radar-Signale $R_{HF}$ in Bezug zur horizontalen Achse a den zugehörigen Raumwinkeln $\alpha$, $\beta$ zuordnen und anhand dessen das dreidimensionale Füllstands-Profil $L(\alpha, \beta)$ erstellen.

Wie in Fig. 1 dargestellt wird, ist die Antennen-Anordnung 10 im Inneren des Behälters 3 angeordnet, während die Sende-/Empfangs-Anordnung 11 in einem separaten Gehäuse außerhalb des Behälters 3 angeordnet ist. Um die Sende-/Empfangs-Einheit 11 vor etwaigen thermische Belastungen aus dem Behälter-Inneren zu schützen, bzw. um das Behälter-Innere explosionsschutz-konform von der Sende-/Empfangs-Einheit 11 zu trennen, ist das Gehäuse daher durch einen Messgeräte-Hals 12 von der Antennen-Anordnung 10 beabstandet. Dabei ist die horizontal gen Füllgut 2 ausgerichtete Gerätehals-Achse a des Messgeräte-Halses 12, die den Abstand zwischen der Antennen-Anordnung Einheit 11 und dem Gehäuse definiert, entsprechend lang ausgelegt.

Die hochfrequenztechnische Anbindung der Sende- und Empfangs-Antennen der Antennen-Anordnung 10 an die Sende-/Empfangs-Einheit 11 erfolgt über eine entsprechende Anzahl an Sende-Wellenleitern 121, 121' und Empfangs-Wellenleitern 122, 122', die jeweils zur Anzahl an Sende- und Empfangs Antennen korrespondieren und innerhalb des Messgeräte-Halses 12 parallel zur Gerätehals-Achse a verlaufen. Dabei können die Sende-Wellenleiter 121, 121' und/oder die Empfangs-Wellenleiter 122, 122' prinzipiell sowohl als Hohlleiter 121', 122', als auch als dielektrischer Wellenleiter 121, 122 ausgelegt werden. Damit die Array-förmig angeordneten Antennen korrekt an die korrespondierenden Wellenleiter 121, 121', 122, 122' angebunden werden, kann das Füllstandsmessgerät 1 als laterale Umverteiler-Struktur ein nicht näher dargestelltes Manifold umfassen, das zwischen der Antennen-Anordnung 10 und dem Messgeräte-Hals 12 angeordnet ist. Zur explosionsschutz-konformen Abdichtung des Messgeräte-Halses 12 kann in dessen Inneren zudem eine hermetische Trennung angeordnet sein, die beispielsweise auf einem Glas oder einer Keramik basiert und mittels Schweißen im Messgeräte-Hals 12 eingebracht ist.

Um bei der Füllstandsmessung eine genügende Winkelauflösung erzielen zu können, ist es notwendig, dass die Antennen-Anordnung 10 eine Mindest-Anzahl an Sende- und Empfangs-Antennen aufweist. Bei technisch und wirtschaftlich sinnvollen Lösungen entspricht dies zwischen 16 und 200 Sende- und Empfangs-Kanälen zur hinreichend genauen Umsetzung des MIMO-Prinzips. Mit steigender Anzahl an Antennen ist es jedoch schwer, die entsprechende Anzahl an Wellenleitern 121, 121', 122, 122' so auszulegen bzw. zu fertigen, dass sie aufwandsarm innerhalb des Messgeräte-Halses 12 anordbar sind und möglichst wenig Platz einnehmen.

Um dies zu ermöglichen, sind die Sende-Wellenleiter 121, 121' erfindungsgemäß entlang einer ersten Kontur $k_1$, welche die Gerätehals-Achse des Messgeräte-Halses 12 a radialsymmetrisch umschließt, in regelmäßigen Abständen zueinander aufgereiht. Auch die Empfangs-Wellenleiter 122, 122' sind entweder abwechselnd mit den Sende-Wellenleitern 121, 121' entlang der ersten Kontur $k_1$ angeordnet, oder die Empfangs-Wellenleiter 122 sind entlang einer zweiten Kontur $k_2$, welche die Gerätehals-Achse a ebenfalls radialsymmetrisch umschließt, aufgereiht. Dabei folgen die erste Kontur $k_1$ und ggf. die zweiten Kontur $k_2$ idealerwiese der Querschnittsform des Messgeräte-Halses 12.

Das bedeutet, im Falle eines runden Querschnittes des Messgeräte-Halses 12 sind die erste Kontur $k_1$ und ggf. die zweite Kontur $k_2$ kreisförmig.

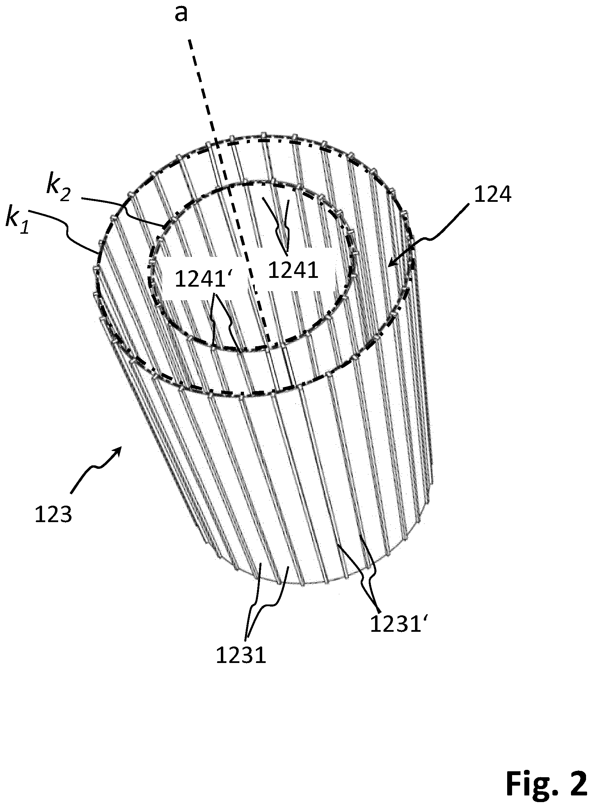

Fertigungstechnisch bietet diese erfindungsgemäße Anordnung der Wellenleiter 121, 121', 122, 122' innerhalb des Messgeräte-Halses 12 den Vorteil, dass die Wellenleiter 121, 121' 122, 122' gemeinsam durch einen ersten Basiskörper 123 oder gegebenenfalls zusätzlich durch einen zweiten Basiskörper 124 ausgebildet werden können, wie es als dreidimensionale Ansicht in Fig. 2 dargestellt ist: Zu sehen sind in Fig. 2 zwei Basiskörper 123, 124, die in Bezug zur Gerätehals-Achse a jeweils kreisförmig entlang der Konturen $k_1$, $k_2$ ausgestaltet sind, so dass die Basiskörper 123, 124 entlang der Gerätehals-Achse a jeweils eine zylindrische Grundform bilden. Dabei weisen die Basiskörper 123, 124 als monolithische Bestandteile entlang der Konturen $k_1$, $k_2$ in regelmäßigen Abständen jeweils abwechselnd verdickte Segmente 1231', 1241' und verjüngte Segmente 1231, 1241 auf, welche die Anzahl, Positionen und Geometrie der einzelnen Wellenleiter 121, 121' 122, 122' definiert.

Für den Fall, dass die Wellenleiter 121, 121' 122, 122' als dielektrische Wellenleiter 121, 122 ausgelegt sind, werden die dielektrischen Wellenleiter 121, 122 entlang der Konturen $k_1$, $k_2$ durch die verdickten Segmente 1231', 1241' der Basiskörper 123, 124 gebildet. Um als dielektrische Wellenleiter 121, 122 fungieren zu können, sind die Basiskörper 123, 124 entsprechend aus einem elektrisch isolierenden Material zu fertigen, dass einen Dielektrizitätswert von mindestens zwei aufweist. Genutzt werden können hierzu beispielsweise Kunststoffe wie PTFE, PE oder PFA. Die verjüngten Segmente 1231, 1241 bilden im Falle von dielektrischen Wellenleitern jeweils eine Stützstruktur zwischen den einzelnen dielektrischen Wellenleitern 121, 122 aus.

Sofern die Wellenleiter 121, 121' 122, 122' als Hohlleiter 121', 122' ausgebildet sind, verhält es sich mit den Segmenten 1231, 1231', 1241, 1241' genau entgegengesetzt: Die verdickten Segmente 1231', 1241' der Basiskörper 123, 124 bilden - in Bezug zur jeweiligen Kontur $k_1$, $k_2$ - eine Stützstruktur zwischen den Hohlleitern 121', 122' aus, wobei die eigentlichen Hohlleiter (wiederum in Bezug zur jeweiligen Kontur $k_1$, $k_2$) durch die Oberfläche des Basiskörpers 123, 124 im Bereich der verjüngten Segmente 1231, 1241 definiert ist. Die Hohlleiter 121', 122' werden also quasi als Negativ-Form der verjüngten Segmente 1231, 1241' im Basiskörper 123, 124 ausgebildet. Bei solch einer Auslegung der Wellenleiter 121, 121' 122, 122' als Hohlleiter 121', 122' ist es notwendig, die Basiskörper 123, 124 zumindest im Bereich der verjüngten Segmente 1231, 1241'oberflächig elektrisch leitend auszulegen. Hierzu können die Basiskörper 123, 124 beispielsweise wiederum aus einem Kunststoff gefertigt- und mit einer elektrisch leitfähigen Beschichtung versehen werden, beispielsweise mittels Sputtern oder PECVD ("*Plasma Enhanced Chemical Vapor Deposition*"). Andernfalls können die Basiskörper 123, 124 beispielsweise komplett aus einem Metall gefertigt werden.

Bei der in Fig. 2 gezeigten Ausführungsvariante - sowie bei den in den nachfolgend beschriebenen Ausführungsvarianten des Messgeräte-Halses 11 sind die Basiskörper 123, 124 so ausgelegt, dass die Wellenleiter 121, 121', 122, 122' einen rechteckigen Querschnitt aufweisen. Im Gegensatz hierzu ist es im Sinne der Erfindung jedoch ebenso denkbar, die dort gezeigten Varianten des Messgeräte-Halses 11 so auszulegen, dass die Wellenleiter 121, 121', 122, 122' beispielsweise einen runden Querschnitt aufweisen.

Vorteilhaft an Kunststoff-basierten Basiskörpern 123, 124 ist im Hinblick auf die Fertigung, dass sie beispielsweise mittels Extrusion als Meterware gefertigt werden können. Somit kann der einzelne Basiskörper 123, 124 auf die jeweilige Kontur $k_1$, $k_2$ konfektioniert werden, indem die Meterware auf die erforderliche Konturlänge gekürzt bzw. zugeschnitten wird. Anschließend kann der jeweilige Basiskörper 123, 124 durch Aufwickeln der konfektionierten Kunststoff-Meterware im Messgeräte-Hals 12 gebildet werden. Dabei kann der Messgeräte-Hals 12 ggf. als Einpassung für zumindest den äußeren, ersten Basiskörper 123 dienen, so dass (je nachdem, ob die Sende-Wellenleiter 121, 121' oder die Empfangs-Wellenleiter 122, 122' in Bezug zur Gerätehals-Achse a außenliegend angeordnet sind, sofern nicht alle Wellenleiter 121, 121', 122, 122' auf einer gemeinsamen Kontur $k_1$ aufgereiht sind) die entsprechenden Wellenleiter 121, 121', 122, 122' von innen an den Messgeräte-Hals 12 angrenzen. Der zweite Basisköper 124 bzw. die etwaig entlang der zweiten Kontur $k_2$ aufgereihten Wellenleiter 122, 122' grenzen von innen wiederum an den ersten Basiskörper 123 an.

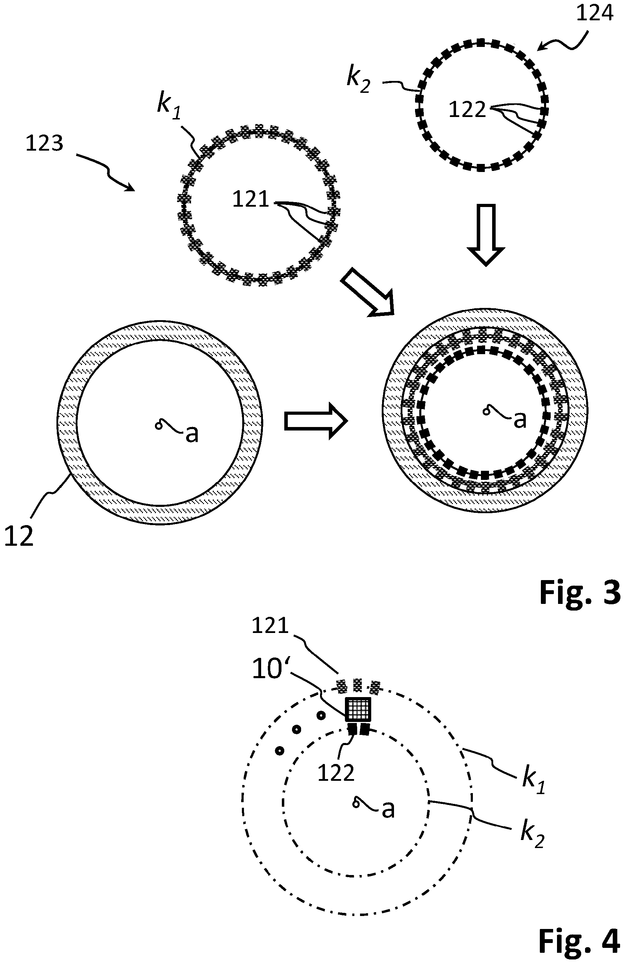

Näher dargestellt ist diese Art, den Gehäusehals 12 mit den Wellenleitern 121, 122 zu bestücken in Fig. 3 als Draufsicht auf den Gehäuse-Hals 12 in Richtung der Hals-Achse a. Bei der dort dargestellten Ausführungsvariante bildet der erste Basiskörper 123 die Sende-Wellenleiter 121 als dielektrische Wellenleiter aus, der zweite Basiskörper 124 bildet die dielektrischen Empfangs-Wellenleiter 122 aus. Dabei verläuft die erste Kontur $k_1$ in Bezug zur Gerätehals-Achse a außerhalb der zweiten Kontur $k_2$, so dass der erste Basiskörper 123 mit den dielektrischen Sende-Wellenleitern 121 nach der Montage - in Bezug zur Gerätehals-Achse a - außerhalb des zweiten Basiskörpers 124 bzw. außerhalb der Empfangs-Wellenleiter 122 angeordnet ist. Dabei weisen der Gehäuse-Hals 12, der erste Basiskörper 123 (bzw. die erste Kontur $k_1$) und der zweite Basiskörper 124 (bzw. die zweite Kontur $k_2$) eine kreisförmige Radialsymmetrie auf. Vorteilhaft an dieser Anordnung, bei welcher die Wellenleiter 121, 122 außen nahe des Gehäusehalses 12 angeordnet sind, ist in Hinblick auf das Füllstandsmessgerät 1 insofern vorteilhaft, als dass im Zentrum des Messgeräte-Halses 12 entlang der Gerätehals-Achse a freier Platz für etwaige weitere Durchführungen und Einbauten des Füllstandsmessgerätes 1 ist.

Anhand von Fig. 4 wird verdeutlicht, dass sich die erfindungsgemäße Anordnung der Wellenleiter 121, 121' 122, 122' auch vorteilhaft auf die Auslegung der Sende-/EmpfangsEinheit 11 auswirkt: Zur Ansteuerung der Antennen-Anordnung 10 über die Wellenleiter 121, 121', 122, 122' umfasst die Sende-/Empfangs-Einheit 11 als Hochfrequenz-Bauteile vorzugsweise MMIC 10', da mittels ihnen je nach Auslegung mehrere Radar-Signale $S_{HF}$, $R_{HF}$ getrennt voneinander verarbeitet werden können: Beispielsweise kann mittels MMIC 10' pro Antenne bzw. pro Wellenleiter 121, 121', 122, 122' eine definierte Phasenverschiebung eingeprägt werden, die Signal-Amplitude kann verstärkt werden, oder das empfangene Radar-Signal $R_{HF}$ kann in ein elektrisches Signal transformiert werden, etc. Hierdurch lässt sich beispielsweise innerhalb der Sende-/Empfangs-Einheit 11 das MIMO-Prinzip umsetzen, um somit die Strahlschwenkung des auszusendenden Radar-Signals $S_{HF}$ durchzuführen. Hochfrequenztechnisch angebunden werden können die einzelnen Wellenleiter 121, 121', 122, 122' beispielsweise über geeignete Einkoppel-Strukturen an deren oberen Endbereich, beispielsweise in Form einer konischen Zuspitzung der Wellenleiter 121, 121', 122, 122' gen MMIC 10'. Auch gen Antennen-Anordnung 10 können die Wellenleiter 121, 121', 122, 122' an deren unteren Endbereich mit entsprechenden Einkoppel-Strukturen ausgelegt werden.

Unter anderem, um hinsichtlich der Strahlschwenkung eine ausreichende Winkelauflösung zu erzielen, übersteigt die Anzahl an Antennen die verfügbare Anzahl an Sende- und Empfangs-Kanälen pro MMIC 10' um ein Vielfaches, so dass der Sende-Empfangs-Einheit 10 eine entsprechende Mehrzahl an MMIC 10' zugeordnet ist. Mit steigender Anzahl an MMIC 10' erhöht sich jedoch die Gefahr, dass sich diese untereinander thermisch stark belasten, da jeder einzelne MMIC 10' bereits eine erhebliche thermische Verlustleistung generiert. Durch die in Fig. 4 skizzierte Anordnung der MMIC 10' oberhalb des Messgeräte-Halses 12 wird die thermische Belastung der MMIC 10' untereinander minimiert, da der mögliche Abstand zwischen den einzelnen MMIC 10' maximal ist. Wie in Fig. 4 gezeigt ist, sind die MMIC 10' hierzu in Bezug zur Gerätehals-Achse a zwischen der ersten Kontur $k_1$ und der zweiten Kontur $k_2$ angeordnet. Somit sind die MMIC 10' entlang der Konturen $k_1$, $k_2$ gleichmäßig und maximal zueinander beabstandet. Der Übersichtlichkeit zugunsten ist in Fig. 4 lediglich ein MMIC 10' entlang der Konturen $k_1$, $k_2$ dargestellt.

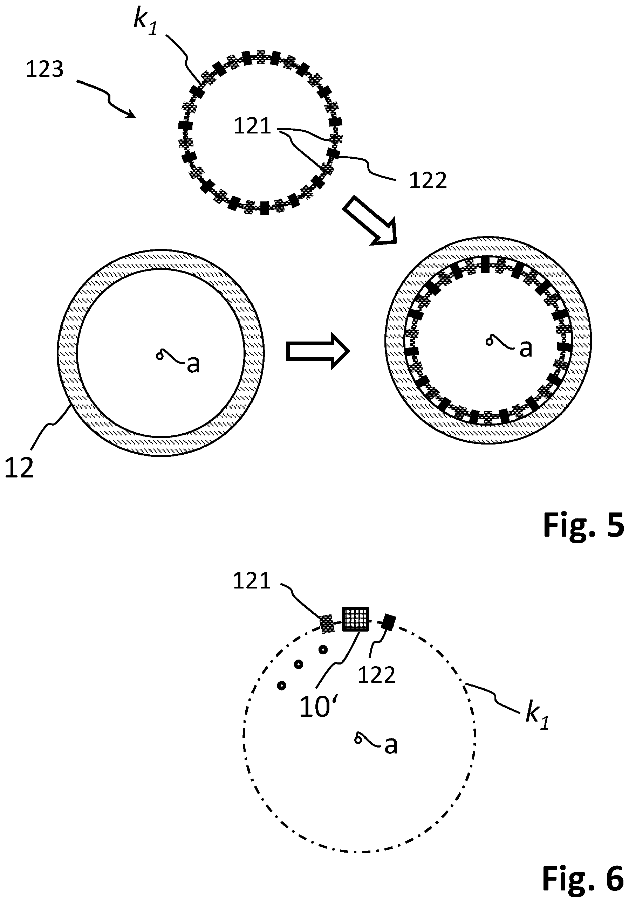

Eine zweite, mögliche Ausgestaltungsvariante des Messgeräte-Halses 12 ist in Fig. 5 gezeigt. Die dort gezeigte Variante stimmt mit dem in Fig. 3 beschriebenen Messgeräte-Hals 12 überein, mit Ausnahme der Anordnung der dielektrischen Wellenleiter 121, 122: Entgegengesetzt zu Fig. 3 umfasst der Messgeräte-Hals 12 keinen zweiten Basiskörper 124. Vielmehr sind neben den Sende-Wellenleitern 121 auch die dielektrischen Empfangs-Wellenleiter 122 Bestandteil des ersten Basiskörpers 123. Dementsprechend sind in diesem Fall die dielektrischen Sende-Wellenleiter 121 und die dielektrischen Empfangs-Wellenleiter 122 in gleichen Abständen jeweils abwechselnd entlang der ersten Kontur $k_1$ angeordnet. Vorteilhaft an dieser Ausführungsvariante ist, dass auf einen zweiten Basiskörper 124 verzichtet werden kann, während jedoch bei ansonsten gleichen Abmessungen der einzelnen Wellenleiter-Querschnitte insgesamt weniger Wellenleiter 121, 122 untergebracht werden können.

Analog zu Fig. 4 begünstigt auch die in Fig. 5 gezeigte Ausführungsvariante das thermische Management innerhalb der Sende-/Empfangs-Einheit 11: Wie in Fig. 6 dargestellt ist, können die MMIC 10' in diesem Fall oberhalb des Messgeräte-Halses 12 derart innerhalb der Sende-/Empfangs-Einheit 11 angeordnet werden, dass sie in Bezug zur Gerätehals-Achse a entlang der ersten Kontur $k_1$ jeweils zwischen einem der Sende-Wellenleiter 121, 121' und einem der Empfangs-Wellenleiter 122, 122' angeordnet sind. Somit sind die MMIC 10' auch in diesem Fall maximal möglich zueinander beabstandet, so dass der thermische Einfluss aufeinander minimiert wird. Auch in Fig. 6 wird der Übersichtlichkeit zugunsten lediglich ein MMIC 10' entlang der Konturen $k_1$, $k_2$ dargestellt.

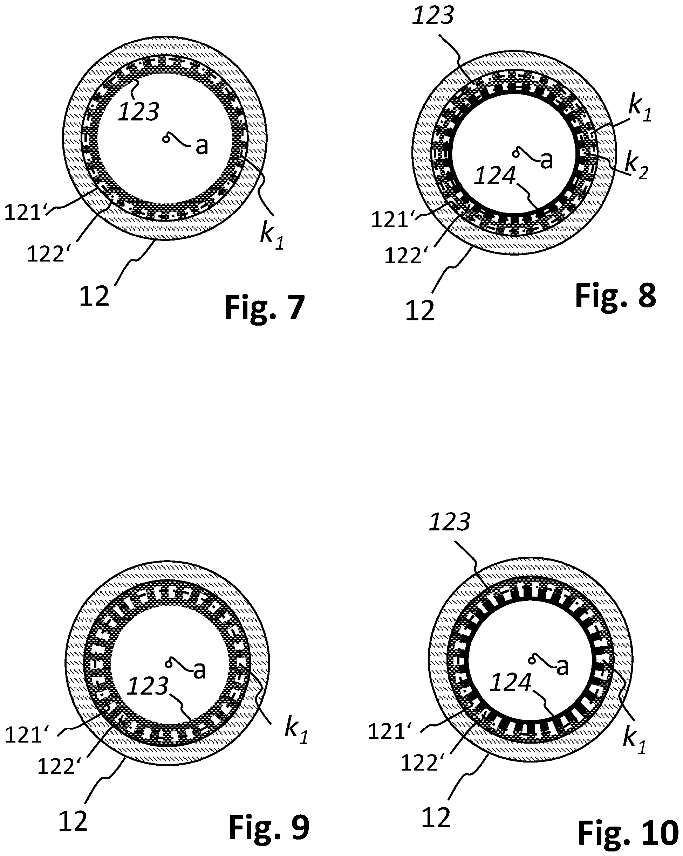

Im Gegensatz zu den in Fig. 3 und Fig. 5 gezeigten Ausführungsbeispielen des Messgeräte-Halses ist es auch möglich, die Wellenleiter 121, 121', 122, 122' mittels der Basiskörper 123, 124 nicht als dielektrische Wellenleiter 121, 122, sondern als Hohlleiter 121', 122' auszulegen. Das heißt, die Hohlleiter 121', 122' werden in diesen Fällen im Bereich der verjüngten Segmente 1231', 1241' der Basiskörper 123, 124 als deren Negativ-Form ausgebildet: Hierzu sind in Fig. 7 bis Fig. 10 verschiedene Ausführungsvarianten gezeigt:

Bei der Ausführungsvariante in Fig. 7 ist lediglich der erste Basiskörper 123 in den Messgeräte-Hals 12 eingesetzt. Dabei ist der erste Basiskörper 123 bzw. die erste Kontur $k_1$ derart auf den Messgeräte-Hals 12 ausgelegt, dass die Hohlleiter 121', 122' in Bezug zur Gerätehals-Achse a von innen unmittelbar an den Messgeräte-Hals 12 angrenzen. Da die Hohlleiter 121;' 122' lediglich vom ersten Basiskörper 123 ausgebildet werden, sind sowohl die Sende-Wellenleiter 121', als auch die Empfangs-Wellenleiter 122' abwechselnd entlang der ersten Kontur $k_1$ angeordnet.

Die in Fig. 8 dargestellte Ausführungsvariante des erfindungsgemäßen Messgeräte-Halses 12 entspricht im Wesentlichen der in Fig. 7 dargestellten Variante. Unterschied ist in diesem Fall, dass die Empfangs-Hohlleiter 122' analog zu der in Fig. 3 gezeigten Ausführungsvariante innerhalb des ersten Basiskörpers 123 bzw. innerhalb der Sende-Hohlleiter 121'angeordnet sind. Hierzu ist innerhalb des ersten Basiskörpers 123 der zweite Basiskörper 124 wiederum derart angeordnet, dass der zweite Basiskörper 124 in Verbindung mit dem ersten Basiskörper 123 jeweils die Innenwandungen der rechteckförmigen Empfangs-Hohlleiter 122' ausbildet. Wie in Fig. 8 zu erkennen ist, sind dementsprechend drei Seiten der vom Querschnitt her rechteckförmigen Hohlleiter-Innenwandung der Empfangs-Hohlleiter 122' durch en zweiten Basiskörper 124 ausgebildet, während die in Bezug zur Gerätehals-Achse a äußere Innenwand der Hohlleiter-Innenwandung durch eine entsprechendes Innenwand-Segment des ersten Basiskörpers 123 gebildet wird.

Auch die in Fig. 9 gezeigte Ausführungsvariante entspricht der in Fig. 7 gezeigten Variante des erfindungsgemäßen Messgeräte-Halses 12, mit dem Unterschied, dass die Hohlleiter 121', 122' in Bezug zur Gerätehals-Achse a von innen nicht unmittelbar an den Messgeräte-Hals 12 angrenzen. Vielmehr sind die Hohlleiter 121', 122' als vollständige Negativform des ersten Basiskörpers 123 ausgebildet. Insbesondere bei dieser Auslegungsvariante ist es fertigungstechnisch möglich, die Hohlleiter 121', 122' mit einem nicht-rechteckigen Innenquerschnitt auszulegen, wie beispielsweise mit einem runden Innenquerschnitt. Der zweite Basiskörper 124 ist bei dieser Ausführungsvariante nicht vorgesehen. Vorteilhaft an der in Fig. 9 dargestellten Ausführungsvariante ist, dass die Hohlleiter 121' 122' keine etwaigen Spalte zwischen den Basiskörpern 123, 124 bzw. zur Innenwand des Messgeräte-Halses 12 ausbilden können, so dass hierdurch die Hochfrequenzeigenschaften nicht beeinträchtigt werden.

Unter anderem für den Fall, dass es auf Basis des gewünschten Materials fertigungstechnisch nicht möglich ist, die Hohlleiter 121', 122' wie gemäß Fig. 9 als vollständige Negativform des ersten Basiskörpers 123 auszubilden, besteht eine hierzu korrespondierende Auslegungsvariante des erfindungsgemäßen Messgeräte-Halses 12 in der in Fig. 10 gezeigten Version: In diesem Fall sind wiederum sowohl die Sende-Hohlleiter 121, als auch die Empfangs-Hohlleiter 122' entlang der ersten Kontur $k_1$ angeordnet. Dabei werden die Hohlleiter 121', 122' jedoch durch den ersten Basiskörper 123 und den zweiten, innenliegenden Basiskörper 124 zusammen gebildet. Hierzu sind die Basiskörper 123, 124 so zueinander ausgerichtet, dass deren verjüngte Segmente 1231, 1241 deckungsgleich zueinander angeordnet sind und jeweils einen korrespondierenden Querschnitt aufweisen, um die Hohlleiterquerschnitte entsprechend auszubilden.

## Bezugszeichenliste

| | |
|---|---|
| 1 | Füllstandsmessgerät |
| 2 | Füllgut |
| 3 | Behälter |
| 4 | Übergeordnete Einheit |
| 10 | Antennen-Anordnung |
| 11 | Sende-/Empfangs-Einheit |
| 12 | Messgeräte-Hals |
| 121 | Sende-Wellenleiter |
| 122 | Empfangs-Wellenleiter |
| 123 | Erster Basiskörper |
| 124 | Zweiter Basiskörper |
| 1231 | Erste Stützstruktur |
| 1241 | Zweite Stützstrukturen |
| a | Gerätehals-Achse |
| d | Entfernung |
| h | Einbauhöhe |
| $k_1$ | Erste Kontur |
| $k_2$ | Zweite Kontur |
| $L(\alpha, \beta)$ | Füllstands-Profil |
| $R_{HF}$ | Reflektiertes Radar-Signal |
| $S_{HF}$ | Radar-Signal |
| $\alpha, \beta$ | Raumwinkel |

15      **EP 4 244 585 B1**      16

**Patentansprüche**

1. Radar-basiertes Füllstandsmessgerät zur Bestimmung eines Füllstands-Profils (L($\alpha$, $\beta$)) eines Füllguts (2), folgende Komponenten umfassend:

   - Eine Antennen-Anordnung (10), mit

      ◦ einer definierten Anzahl an Sende-Antennen, mittels denen jeweils ein Radar-Signal ($S_{HF}$) gen Füllgut (2) ausendbar ist, und
      ◦ einer definierten Anzahl an Empfangs-Antennen, mittels denen nach Reflektion des Radar-Signals ($S_{HF}$) an der Füllgut-Oberfläche jeweils ein Empfangs-Signal ($R_{HF}$) empfangbar ist,

   - eine Sende-/Empfangs-Einheit (11), die ausgelegt ist,

      ◦ das jeweilige Radar-Signal ($S_{HF}$) zu erzeugen, und
      ◦ um anhand der Empfangs-Signale ($R_{HF}$) das Füllstands-Profil (L($\alpha$, $\beta$)) zu erstellen, und

   - einen Messgeräte-Hals (12), der entlang einer zentralen Gerätehals-Achse (a) zwischen der Antennen-Anordnung (10) und der Sende-/Empfangs-Einheit (11) angeordnet ist, mit

      ◦ einer zur Anzahl an Sende-Antennen korrespondierenden Anzahl an Sende-Wellenleitern (121, 121'), welche innerhalb des Messgeräte-Halses (12) parallel zur Gerätehals-Achse (a) verlaufen und die Sende-Antennen jeweils mit der Sende-/Empfangs-Einheit (10) verbinden, und
      ◦ einer zur Anzahl an Empfangs-Antennen korrespondierenden Anzahl an Empfangs-Wellenleitern (122, 122'), welche innerhalb des Messgeräte-Halses (12) parallel zur Gerätehals-Achse (a) verlaufen und die Sende-Antennen jeweils mit der Sende-/Empfangs-Einheit (10) verbinden, **dadurch gekennzeichnet, dass**
      ◦ die Sende-Wellenleiter (121, 121') entlang einer ersten Kontur ($k_1$), welche die Gerätehals-Achse (a) radialsymmetrisch umschließt, aufgereiht sind, und
      ◦ dass die Empfangs-Wellenleiter (122, 122') entweder entlang der ersten Kontur ($k_1$) oder entlang einer zweiten Kontur ($k_2$), welche die Gerätehals-Achse (a) ebenfalls radialsymmetrisch umschließt, aufgereiht sind.

2. Füllstandsmessgerät nach Anspruch 1, wobei für den Fall, dass die Empfangs-Wellenleiter (122, 122') entlang der zweiten Kontur ($k_2$) angeordnet sind, die Sende-Wellenleiter (121, 121') in Bezug zur Gerätehals-Achse (a) außerhalb der Empfangs-Wellenleiter (122, 122') angeordnet sind.

3. Füllstandsmessgerät nach Anspruch 1 oder 2, wobei der Messgeräte-Hals (12), die erste Kontur ($k_1$) und die zweite Kontur ($k_2$) in Bezug zur Gerätehals-Achse (a) eine gleiche Radialsymmetrie, insbesondere eine kreisförmige Symmetrie, aufweisen.

4. Füllstandsmessgerät nach Anspruch 1, 2 oder 3, wobei die Sende-/EmpfangsEinheit (11) zur Ansteuerung der Antennen-Anordnung (10) über die Wellenleiter (121, 121', 122, 122') eine entsprechende Anzahl an MMIC (10') umfasst,

   wobei die MMIC (10') oberhalb des Messgeräte-Halses (12) sowie in Bezug zur Gerätehals-Achse (a) entlang der ersten Kontur ($k_1$) jeweils zwischen einem der Sende-Wellenleiter (121, 121') und einem der Empfangs-Wellenleiter (122, 122') angeordnet sind, sofern die Empfangs-Wellenleiter (122, 122') abwechselnd mit den Sende-Wellenleitern (121, 121') entlang der ersten Kontur ($k_1$) aufgereiht sind, oder
   wobei die MMIC (10') oberhalb des Messgeräte-Halses (12) sowie in Bezug zur Gerätehals-Achse (a) zwischen der ersten Kontur ($k_1$) und der zweiten Kontur ($k_2$) angeordnet sind, sofern die Empfangs-Wellenleiter (122, 122') entlang der zweiten Kontur ($k_2$) angeordnet sind.

5. Füllstandsmessgerät nach einem der vorhergehenden Ansprüche, wobei die Sende-Wellenleiter (121, 121') und/oder die Empfangs-Wellenleiter (122, 122') als Hohlleiter (121', 122') oder als dielektrischer Wellenleiter (121, 122) ausgelegt sind.

6. Füllstandsmessgerät nach einem der vorhergehenden Ansprüche, wobei die Sende-Wellenleiter (121, 121') und, sofern die Empfangs-Wellenleiter (122, 122') abwechselnd mit den Sende-Wellenleitern (121, 121') entlang der ersten Kontur ($k_1$) aufgereiht sind, die Empfangs-Wellenleiter (122, 122') durch einen ersten Basiskörper (123) derart ausgebildet werden, dass zwischen den einzelnen Wellenleitern (121, 121', 122, 122') jeweils eine erste Stützstruktur (1231, 1231') des ersten Basiskörpers (123) angeordnet ist.

7. Füllstandsmessgerät nach Anspruch 6, wobei die Wellenleiter (121, 121', 122, 122') derart als dielektrische Wellenleiter (121, 122) realisiert sind, dass die dielektrischen Wellenleiter (121, 122) und der erste Basiskörper (123) als ein monolithisches Formteil gefertigt sind, wobei das monolithische

9

Formteil insbesondere mittels Heißumformen, Spritzguss, Extrusion oder mittels additiver Fertigung von PTFE, PE oder PFA gefertigt ist.

8. Füllstandsmessgerät nach Anspruch 6, wobei die Wellenleiter (121, 121', 122, 122') derart als Hohlleiter (121', 122') realisiert sind, dass zumindest der erste Basiskörper (123), insbesondere in Verbindung mit einem entsprechenden Innenwand-Segment des Messgeräte-Halses (12), jeweils die Innenwandungen der Hohlleiter (121', 122') ausbildet.

9. Füllstandsmessgerät nach einem der vorhergehenden Ansprüche 6 bis 8, wobei der erste Basiskörper (123) geometrisch derart ausgelegt ist, dass die entlang der ersten Kontur $(k_1)$ aufgereihten Wellenleiter (121, 121', 122, 122') an den Messgeräte-Hals (12) angrenzen.

10. Füllstandsmessgerät nach einem der vorhergehenden Ansprüche, wobei die Empfangs-Wellenleiter (122), sofern die Empfangs-Wellenleiter (122) entlang der zweiten Kontur $(k_2)$ aufgereiht sind, innerhalb des Messgeräte-Halses (12) zumindest durch einen zweiten Basiskörper (124) derart ausgebildet werden, dass zwischen den einzelnen Empfangs-Wellenleitern (122, 122') jeweils eine zweite Stützstruktur (1241, 1241') des zweiten Basiskörpers (124) angeordnet ist.

11. Füllstandsmessgerät nach Anspruch 10, wobei die Empfangs-Wellenleiter (121) derart als dielektrische Wellenleiter (121, 122) realisiert sind, dass die Empfangs-Wellenleiter (121, 122) und der zweite Basiskörper (124) ) als ein monolithisches Formteil gefertigt sind, wobei das monolithische Formteil insbesondere mittels Heißumformen, Spritzguss, Extrusion oder additiver Fertigung von PTFE, PE oder PFA gefertigt ist.

12. Füllstandsmessgerät nach Anspruch 10, wobei die Empfangs-Wellenleiter (122, 122') derart als Hohlleiter (122') realisiert sind, dass zumindest der zweite Basiskörper (124), insbesondere in Verbindung mit dem ersten Basiskörper (123), jeweils die Innenwandungen der Empfangs-Hohlleiter (122') ausbilden.

13. Füllstandsmessgerät nach einem der Ansprüche 10 bis 12, wobei der zweite Basiskörper (124) geometrisch derart ausgelegt ist, dass die entlang der zweiten Kontur $(k_2)$ aufgereihten Empfangs-Wellenleiter (122, 122') an den ersten Basiskörper (123) angrenzen.

**Claims**

1. A radar-based fill level meter for determining a fill level profile $(L(\alpha, \beta))$ of a filling material (2), comprising the following components:

   - An antenna assembly (10), with

     ◦ a defined number of transmitting antennas, each of which can be used to transmit a radar signal $(S_{HF})$ in the direction of the filling material (2), and
     ◦ a defined number of receiving antennas, each of which can be used to receive a receive signal $(R_{HF})$ once the radar signal $(S_{HF})$ has been reflected on the surface of the filling material,

   - a transmitter/receiver unit (11), which is configured

     ◦ to generate each radar signal $(S_{HF})$, and
     ◦ to create the fill level profile $(L(\alpha, \beta))$ based on the receive signals (RHF), and

   - a measuring device neck (12), which is arranged along a central device neck axis (a) between the antenna assembly (10) and the transmitter/receiver unit (11), with

     ◦ a number of transmitting waveguides (121, 121') which corresponds to the number of transmitting antennas, which extend inside the measuring device neck (12) parallel to the device neck axis (a) and connect each transmitting antenna to the transmitter/receiver unit (11), and
     ◦ a number of receiving waveguides (122, 122') which corresponds to the number of receiving antennas, which extend inside the measuring device neck (12) parallel to the device neck axis (a) and connect each transmitting antenna to the transmitter/receiver unit (11),
     **characterized in that**
     ◦ the transmitting waveguides (121, 121') are arranged along a first contour $(k_1)$, which radially symmetrically surrounds the device neck axis (a), and
     ◦ the receiving waveguides (122, 122') are arranged either along the first contour $(k_1)$ or along a second contour $(k_2)$, which also radially symmetrically surrounds the device neck axis (a).

2. The fill level meter as claimed in claim 1, wherein in the event that the receiving waveguides (122, 122') are arranged along the second contour $(k_2)$, the transmitting waveguides (121, 121') are arranged outside the receiving waveguides (122, 122') relative to the device neck axis (a).

3. The fill level meter as claimed in claim 1 or 2, wherein the measuring device neck (12), the first contour ($k_1$), and the second contour ($k_2$) have an identical radial symmetry, in particular a circular symmetry, relative to the device neck axis (a).

4. The fill level meter as claimed in claim 1, 2 or 3, wherein the transmitter/receiver unit (11) comprises an appropriate number of MMICs (10') for controlling the antenna assembly (10) via the waveguides (121, 121', 122, 122'), wherein each MMIC (10') above the measuring device neck (12) and relative to the device neck axis (a) along the first contour ($k_1$) is arranged between one of the transmitting waveguides (121, 121') and one of the receiving waveguides (122, 122'), if the receiving waveguides (122, 122') are arranged so that they alternate with the transmitting waveguides (121, 121') along the first contour ($k_1$), or wherein the MMICs (10') are arranged above the measuring device neck (12) and relative to the device neck axis (a) between the first contour ($k_1$) and the second contour ($k_2$), if the receiving waveguides (122, 122') are arranged along the second contour ($k_2$).

5. The fill level meter as claimed in one of the preceding claims, wherein the transmitting waveguides (121, 121') and/or the receiving waveguides (122, 122') are configured as hollow metallic waveguides (121', 122') or as dielectric waveguides (121, 122).

6. The fill level meter as claimed in one of the preceding claims, wherein the transmitting waveguides (121, 121') and, if the receiving waveguides (122, 122') are arranged so that they alternate with the transmitting waveguides (121, 121') along the first contour ($k_1$), the receiving waveguides (122, 122') are formed by a first base body (123) in such a way that a first support structure (1231, 1231') of the first base body (123) is arranged between each of the individual waveguides (121, 121', 122, 122').

7. The fill lever meter as claimed in claim 6, wherein the waveguides (121, 121', 122, 122') are implemented as dielectric waveguides (121, 122) in such a way that the dielectric waveguides (121, 122) and the first base body (123) are produced as a monolithic molded part, wherein the monolithic molded part is produced in particular by means of the hot forming, injection molding, extrusion, or 3D printing of PTFE, PE, or PFA.

8. The fill level meter as claimed in claim 6, wherein the waveguides (121, 121', 122, 122') are implemented as hollow metallic waveguides (121', 122') in such a way that at least the first base body (123), in particular together with a corresponding inner wall segment of the measuring device neck (12), forms the inner walls of each hollow metallic waveguide (121', 122').

9. The fill level meter as claimed in one of the preceding claims 6 to 8, wherein the first base body (123) is geometrically configured in such a way that the waveguides (121, 121', 122, 122') arranged along the first contour ($k_1$) border the measuring device neck (12).

10. The fill level meter as claimed in one of the preceding claims, wherein the receiving waveguides (122), if the receiving waveguides (122) are arranged along the second contour ($k_2$), are configured inside the measuring device neck (12) at least by a second base body (124) in such a way that a second support structure (1241, 1241') of the second base body (124) is arranged between each of the receiving waveguides (122, 122').

11. The fill level meter as claimed in claim 10, wherein the receiving waveguides (121) are implemented as dielectric waveguides (121, 122) in such a way that the receiving waveguides (121, 122) and the second base body (124) are produced as a monolithic molded part, wherein the monolithic molded part is produced in particular by means of the hot forming, injection molding, extrusion, or 3D printing of PTFE, PE, or PFA.

12. The fill level meter as claimed in claim 10, wherein the receiving waveguides (122, 122') are implemented as hollow metallic waveguides (122') in such a way that at least the second base body (124), in particular together with the first base body (123), forms the inner walls of each receiving hollow metallic waveguide (122').

13. The fill level meter as claimed in one of claims 10 to 12, wherein the second base body (124) is geometrically configured in such a way that the receiving waveguides (122, 122') arranged along the second contour ($k_2$) border the first base body (123).

**Revendications**

1. Transmetteur de niveau basé sur un radar destiné à la détermination d'un profil de niveau (L($\alpha,\beta$)) d'un produit (2), lequel transmetteur comprend les composants suivants :

- un arrangement d'antennes (10), avec

  ◦ un nombre défini d'antennes d'émission, au moyen desquelles un signal radar ($S_{HF}$) peut être émis vers le produit (2), et
  ◦ un nombre défini d'antennes de réception, au moyen desquelles un signal de réception ($R_{HF}$) peut être reçu après réflexion du signal radar ($S_{HF}$) sur la surface du produit,

- une unité d'émission/réception (11), laquelle est conçue pour

   ◦ générer le signal radar respectif ($S_{HF}$), et
   ◦ établir le profil de niveau ($L(\alpha,\beta)$) à l'aide des signaux de réception ($R_{HF}$), et

- un col d'appareil de mesure (12), lequel est disposé le long d'un axe central de col d'appareil (a) entre l'arrangement d'antennes (10) et l'unité d'émission/réception (11), avec

   ◦ un nombre de guides d'ondes d'émission (121, 121') correspondant au nombre d'antennes d'émission, lesquels guides d'ondes s'étendent à l'intérieur du col d'appareil de mesure (12) parallèlement à l'axe de col d'appareil (a) et relient les antennes d'émission respectivement à l'unité d'émission/réception (11), et
   ◦ un nombre de guides d'ondes de réception (122, 122') correspondant au nombre d'antennes de réception, lesquels guides d'ondes s'étendent à l'intérieur du col d'appareil de mesure (12) parallèlement à l'axe de col d'appareil (a) et lesquels guides d'ondes relient les antennes d'émission respectivement à l'unité d'émission/réception (11), caractérisé
   ◦ en ce que les guides d'ondes d'émission (121, 121') sont alignés le long d'un premier contour ($k_1$), lequel contour entoure l'axe de col d'appareil (a) avec une symétrie radiale, et en ce que
   ◦ les guides d'ondes de réception (122, 122') sont alignés soit le long du premier contour ($k_1$), soit le long d'un deuxième contour ($k_2$), lequel entoure également l'axe de col d'appareil (a) avec une symétrie radiale.

2. Transmetteur de niveau selon la revendication 1, pour lequel, dans le cas où les guides d'ondes de réception (122, 122') sont disposés le long du deuxième contour ($k_2$), les guides d'ondes d'émission (121, 121') sont disposés à l'extérieur des guides d'ondes de réception (122, 122') par rapport à l'axe de col d'appareil (a).

3. Transmetteur de niveau selon la revendication 1 ou 2, pour lequel le col d'appareil de mesure (12), le premier contour ($k_1$) et le deuxième contour ($k_2$) présentent une même symétrie radiale, notamment une symétrie circulaire, par rapport à l'axe de col d'appareil (a).

4. Transmetteur de niveau selon la revendication 1, 2 ou 3, pour lequel l'unité d'émission/réception (11) comprend un nombre correspondant de MMIC (10') pour la commande de l'arrangement d'antennes (10) par l'intermédiaire des guides d'ondes (121, 121', 122, 122'),
les MMIC (10') étant disposés au-dessus du col d'appareil de mesure (12) ainsi que par rapport à l'axe de col d'appareil (a) le long du premier contour ($k_1$) respectivement entre l'un des guides d'ondes d'émission (121, 121') et l'un des guides d'ondes de réception (122, 122'), dans la mesure où les guides d'ondes de réception (122, 122') sont alignés en alternance avec les guides d'ondes d'émission (121, 121') le long du premier contour ($k_1$), ou les MMIC (10') étant disposés au-dessus du col d'appareil de mesure (12) ainsi que, par rapport à l'axe de col d'appareil (a), entre le premier contour ($k_1$) et le deuxième contour ($k_2$), dans la mesure où les guides d'ondes de réception (122, 122') sont disposés le long du deuxième contour ($k_2$).

5. Transmetteur de niveau selon l'une des revendications précédentes, pour lequel les guides d'ondes d'émission (121, 121') et/ou les guides d'ondes de réception (122, 122') sont conçus comme des guides d'ondes creux (121', 122') ou comme des guides d'ondes diélectriques (121, 122).

6. Transmetteur de niveau selon l'une des revendications précédentes, pour lequel les guides d'ondes d'émission (121, 121') et - dans la mesure où les guides d'ondes de réception (122, 122') sont alignés en alternance avec les guides d'ondes d'émission (121, 121') le long du premier contour ($k_1$) - les guides d'ondes de réception (122, 122') sont formés par un premier corps de base (123) de telle sorte qu'une première structure de support (1231, 1231') du premier corps de base (123) est respectivement disposée entre les différents guides d'ondes (121, 121', 122, 122').

7. Transmetteur de niveau selon la revendication 6, pour lequel les guides d'ondes (121, 121', 122, 122') sont réalisés sous la forme de guides d'ondes diélectriques (121, 122), de telle sorte que les guides d'ondes diélectriques (121, 122) et le premier corps de base (123) sont fabriqués sous la forme d'une pièce moulée monolithique, la pièce moulée monolithique étant fabriquée notamment par formage à chaud, moulage par injection, extrusion ou par fabrication additive de PTFE, PE ou PFA.

8. Transmetteur de niveau selon la revendication 6, pour lequel les guides d'ondes (121, 121', 122, 122') sont réalisés sous la forme de guides d'ondes creux (121', 122') de telle sorte qu'au moins le premier corps de base (123) - notamment en liaison avec un segment de paroi intérieure correspondant du col d'appareil de mesure (12) - forme respectivement les parois intérieures des guides d'ondes (121', 122').

9. Transmetteur de niveau selon l'une des revendications 6 à 8, pour lequel le premier corps de base (123) est géométriquement conçu de telle sorte que les guides d'ondes (121, 121', 122, 122') alignés le long du premier contour ($k_1$) sont adjacents au col d'appareil de mesure (12).

10. Transmetteur de niveau selon l'une des revendications précédentes, pour lequel les guides d'ondes de réception (122) - dans la mesure où les guides d'ondes de réception (122) sont alignés le long du deuxième contour ($k_2$) - sont formés à l'intérieur du col d'appareil de mesure (12) au moins par un deuxième corps de base (124), de telle sorte qu'entre les différents guides d'ondes de réception (122, 122') est disposée respectivement une deuxième structure de support (1241, 1241') du deuxième corps de base (124).

11. Transmetteur de niveau selon la revendication 10, pour lequel les guides d'ondes de réception (121) sont réalisés sous la forme de guides d'ondes diélectriques (121, 122), de telle sorte que les guides d'ondes de réception (121, 122) et le deuxième corps de base (124) sont fabriqués sous la forme d'une pièce moulée monolithique, la pièce moulée monolithique étant fabriquée notamment par formage à chaud, moulage par injection, extrusion ou fabrication additive de PTFE, PE ou PFA.

12. Transmetteur de niveau selon la revendication 10, pour lequel les guides d'ondes de réception (122, 122') sont réalisés sous forme de guides d'ondes creux (122'), de telle sorte qu'au moins le deuxième corps de base (124), notamment en liaison avec le premier corps de base (123), forme respectivement les parois intérieures des guides d'ondes de réception (122').

13. Transmetteur de niveau selon l'une des revendications 10 à 12, pour lequel le deuxième corps de base (124) est conçu géométriquement de telle sorte que les guides d'ondes de réception (122, 122') alignés le long du deuxième contour ($k_2$) sont adjacents au premier corps de base (123).

**Fig. 1**

**Fig. 2**

**Fig. 3**

**Fig. 4**

**Fig. 5**

**Fig. 6**

123

123

a

124

$k_1$

$k_2$

121'

122'

12

**Fig. 7**

**Fig. 8**

a

123

$k_1$

121'

122'

12

**Fig. 9**

123

a

124

$k_1$

121'

122'

12

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013108490 A1
- US 201907427 A1

- CN 111721357 A

**In der Beschreibung aufgeführte Nicht-Patentliteratur**

- **JIAN LI.** *MIMO Radar Signal Processing,* 2009